# EUROPEAN PATENT APPLICATION

(11) **EP 2 626 286 A1**
(43) Date of publication of application: **14.08.2013**
(21) Application number: 11806329.6
(22) Date of filing: 13.07.2011
(51) Int. Cl.: B62M 3/04

(54) **TRACTION SYSTEM USING A DOUBLE-CRANK ALTERNATING CYCLE**

(30) Priority: 21.06.2011 ES 201100711; 14.07.2010 ES 201031072
(71) Applicant: Martinez Murciano, Manuel Reyes, 30003 Murcia (ES)
(72) Inventor: Martinez Murciano, Manuel Reyes, 30003 Murcia (ES)
(74) Representative: Jiminez Brinquis, Ruben
(86) International application number: PCT/ES2011/000226
(87) International publication number: WO 2012/007610

(57) **Abstract**

Double crank alternating cycle traction system in which two independent free-turning cranks with a dynamic articulation at the place where the force is applied are strategically added to a conventional pedal cycle. The operation of the resulting mechanical composition increases the mechanical advantage of the original system. The invention is applicable to pedal cycles, mainly all kinds of bicycles, i.e. bicycles, tricycles, four-wheeled bicycles, moved by the extremities of the human body, i.e. the hands or feet.

## Description

This invention refers to a traction system, more specifically to an angular axle operation system using a double crank which, although specially designed for use on bicycles and similar vehicles, can also be used in a variety of applications in which a push rod or similar is normally used for angular axle operation.

The purpose of the invention is to provide a device with a structure that makes it possible to reduce the force required to turn said axle.

In the scope of practical application of the invention, there are various known systems which seek to optimise the displacement of the push rods that turn the bottom bracket axle, i.e. the pedal cycle. These include the 'bikedrive' system, in which the dead centres of said displacement are used to recover part of the energy that has been accumulated through a number of springs in the intermediate zone, on the horizontal.

There are also known transmission systems that eliminate the dead centre by means of a complex system used for the pedal support.

At the same time, there are known power transmission systems that use elliptic pedalling with push rods of variable length in which the transmission support and auxiliary mechanism are fitted on both sides of the bottom bracket box. There are also power transmission systems for converting circular movements into elliptical movements.

All these and many other systems have one common denominator, which is as follows:
- They have a structure that is complex and, consequently, expensive.
- They are heavy mechanisms.
- In many cases, their efficiency is not optimal.

The double crank alternating cycle traction system proposed in the invention solves the aforementioned problem in a fully satisfactory way thanks to a new technical design, which leads to a simpler structure and the consequent lightness ofthe unit, all with high mechanical efficiency.

Accordingly, the invention consists of a conventional pedal cycle to which two independent free-turning cranks are strategically added, articulated at the point where the force is applied so that the resulting mechanical composition during operation provides an increase in the mechanical advantage for the original system, defining new kinematics. The immediate consequence is that the moment of turn required by the system for movement is slightly lower than that required in the conventional pedal cycle.

More specifically, as has just been pointed out, the device is based on the conventional structure of a pedal cycle, which defines a bottom bracket axle, to which two opposing push rods are attached. The unit also has a disc, gears, belt or element involved in the transmission in question and push rods connected to the classic pedals at the ends.

Based on this conventional structure, the invention focuses its specifications on the fact that a crank is positioned parallel to each push rod and articulated in relation to the point where the force is applied, in other words, the pedal axle. At the other end, it has a turn axle parallel to the bottom bracket axle. Said axle is free-turning and uses a bearing connected to the crank by an extension of the threaded cap or cup bolt that fastens the bottom bracket cartridge in its box.

Consequently, it is obvious that, based on this eccentricity between axles, the movement of the mechanism will define a relative displacement between each
push rod and its corresponding crank, for which three equivalent solutions have been provided.

The first solution consists of the aforementioned push rod, more specifically at the end connected to the pedal axle, defining a longitudinal groove, acting as a runner along which a bearing connected to the pedal axle will move, and, as a consequence of the crank, acting as a feeler and absorbing the difference in length created by the displacement of the push rods due to the eccentricity between their axles.

A second option to counter this effect consists of the push rod having a telescopic structure based on two semi-arms, one of which moves inside the other, to achieve the same effect.

A third option includes the use of two bearings, one on the end of the push rod and the other on the end of the crank at the same height as the pedal axle, articulated by means oftwo opposing shafts that are 180° out of phase and located on a central ring, called the coupling module to the ring and shaft unit.

The separation between the shafts is identical to the separation between the parallel rotation axles ofthe push rod and the crank.

This develops a mechanism containing a second-degree lever and the force required to displace the bottom bracket axle angularly is reduced and, consequently, so is the associated transmission.

To complement the description that is being made and to make it easier to understand the specifications of the invention, in accordance with a preferential example of its practical use, said description includes a set of drawings showing, by way of example but not limited thereto, the Following:
Figure 1. Elevation of a traction system using a double crank alternating cycle in accordance with the purpose of this invention, corresponding to a first practical example containing only the main elements of the mechanism, in other words, the crank and the push rod, showing how they relate to each other.
Figure 2. View similar to that of figure 1 but in which the complete device is shown with the other elements included in the invention.
Figure 3. Diametrical and longitudinal section of the unit shown in the previous figure.
Figure 4. View similar to that of figure 1, but corresponding to a second practical example in which the dynamic articulation is obtained using a telescopic push rod.
Figure 5. View similar to that of figure 4 but in which the complete device is shown with the other elements included in the invention.
Figure 6. Diametrical and longitudinal section ofthe unit shown in the previous figure.
Figure 7. Finally, elevation, profile and section of the threaded cap (cup bolt), whose extension to the exterior holds the parallel axle eccentric at a distance (D) from the bottom bracket axle, showing the positions of the two parallel axles for the push rod and the crank.
Figure 8. Elevation of the traction system according to the practical example in which the dynamic articulation is made using the coupling module.
Figure 9. Diametrical and longitudinal section of the unit shown in the previous figure.
Figure 10. Detailed plan of the coupling module used in the unit shown in figures 8 and 9.

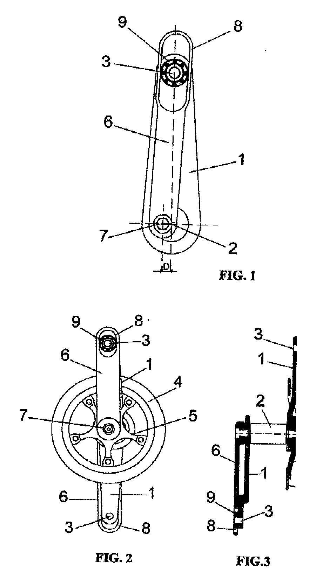

In view of the aforementioned figures and, in particular, figures 1 to 3, it is possible to see how the invention system is based on the conventional structure of a pedal cycle, which includes a pair of push rods (6), opposite each other and connected to a bottom bracket axle (7), where said unit is also connected to one or more discs (4) through the corresponding groove (5), which takes part in the transmission in question.

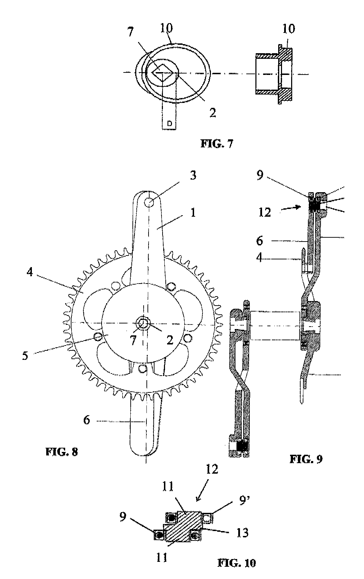

Each push rod (6) is connected to a crank (1) positioned on an imaginary plane parallel to it, finished at one end by a turn axle (2), parallel to the bottom bracket axle (7) but eccentric to it, at a certain distance (D), a free-turning axle (2), through a double bearing (10), as shown in detail in figure 7.

The ends of the cranks (1) will be fitted with the corresponding circular holes for the axles (3) for attaching the corresponding pedals, not shown in the figures.

Furthermore, the opposite end of the push rod (6) is connected to the pedal axle (3) by means of a dynamic articulation.

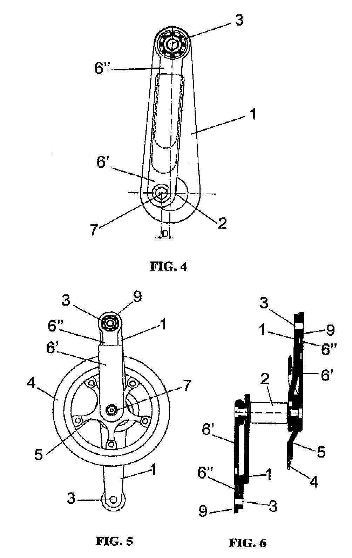

Said dynamic articulation can be made in three different but equivalent ways: the first is shown in figures 1 to 3; the second is shown in figures 4 to 6; and the third is shown in figures 8 to 10.

Thercfore, in accordance with the example shown in figures 1 to 3, the push rod (6) can be finished off at one end with an almond-shaped hole (8) depending on the belt used to move the pedal axle (3) longitudinally and angularly by means of a bearing (9).

At the same time and in accordance with the example shown in figures 4 to 6, the dynamic articulation of the push rod in respect of the pedal axle (3), and consequently, in respect of the crank (1), is achieved by making said push rod telescopic based on two arms (6', 6"), one of which is displaced partially inside the other, so that, as in the previous case of the first arm (6'), it is connected to the bottom bracket axle (7), in the conventional way, whereas the opposite arm (6") is joined in an articulated way to the pedal axle (3) by means of the corresponding bearing (9), which gives the same second-degree lever effect as in the previous case thanks to the eccentricity or distance (D) between the turn axles ofthe push rods and the cranks.

In accordance with the example shown in figures 8 to 10, the dynamic articulation between the push rod (6) and the crank (1) bearing the pedal is made by bearings (9, 9') positioned on the ends by means of the coupling module (12), as shown in figures 9 and 10. As shown in figure 10, this includes shafts (11) on a central ring (13) and adjusted on the aforementioned bearings (9, 9') and out of line with the other at the same distance as they are on the push rod turn axle (7) in respect of the crank (2), as shown in figures 7 and 8. The pedal turn axle (3) will coincide with that of the bearing (9) that receives the shaft (11) on the crank (1), as shown in figure 9.

The rest of the unit maintains the characteristic structure in which the push rod (6) is connected to the desk (4) via the corresponding groove (5), where said construction is familiar to experts in the subject.

Increasing the length of this description is not considered necessary for any expert in the subject to understand the scope of the addition and the benefits it provides.

The materials, shape, size and positions of the elements will be variable as long as any change does not alter the essence of the invention.

The terms under which this memorandum has been drawn up must be taken always in the broad sense and not in any restricting way.

## Claims

1. Double crank alternating cycle traction system which, based on the conventional structure of pedal cycle, which includes a bottom bracket axle (7), to which two opposite push rods (6, 6'-6") arc connected, where said unit is also connected to at least one disc (4), gears, belt or element taking part in the transmission in question, push rods connected to the axles (3) for connecting the corresponding pedals elements for operating the system; characterised because each push rod (6, 6'-6") is connected to a crank (1), positioned on an imaginary plane parallel to it, finished at one end with a turn axle (2), parallel to the bottom bracket axle (7) but eccentric to it, at a certain distance (D), connected to a double bearing (10), cranks (1) with a hole at one end that coincides with the pedal axle (3), with the particularity whereby the opposite end of each push rod (6, 6'-6") is connected to the pedal axle (3) by means of a dynamic articulation.

2. Double crank alternating cycle traction system, according to claim P, characterised because, in accordance with a first way of making the dynamic articulation, it is based on an almond-shaped hole (8), acting as a runner, made in the end of each push rod (6), inside which the pedal axle (3) can move longitudinally and angularly by means of a bearing (9).

3. Double crank alternating cycle traction system, according to claim la, characterised because, in accordance with a second way of making the dynamic articulation, it includes an articulated coupling of the push rod to the pedal axle (3), with the particularity whereby the push rod is telescopic, based on two arms (6', 6"), one of which is displaced partially inside the other, such that the first arm (6') is connected to the bottom bracket axle (7) and the opposite arm (6") is joined by means of an articulation to the pedal axle (3) via the complementary bearing (9).

4. Double crank alternating cycle traction system, according to claim 1, characterised because, in accordance with a third way of making the dynamic articulation, it includes bearings (9, 9'), with one positioned on the end of the push rod (6) and the other on the corresponding end of the crank (1) by means of a coupling module (12) structured as a crankshaft comprising two opposite shafts that arc 180° out of phase, fitted on a central ring (13); and because it includes the option of assembling the solution on one single side of the bottom bracket box, specifically, the side ofthe drive plate (4).
